Europäisches Patentamt

European Patent Office

Office européen des brevets

(19)

(11) Numéro de publication: **0 120 800**
**B1**

(12)

# FASCICULE DE BREVET EUROPÉEN

(45) Date de publication du fascicule du brevet:
13.01.88

(21) Numéro de dépôt: 84450009.0

(22) Date de dépôt: 23.03.84

(51) Int. Cl.⁴: **C 04 B 14/20,** C 04 B 24/26,
C 04 B 28/02, F 16 L 5/02

(54) Composition durcissable, procédé de mise en oeuvre de celle-ci et application notamment au colmatage d'orifices.

(30) Priorité: 28.03.83 FR 8305180

(43) Date de publication de la demande:
03.10.84 Bulletin 84/40

(45) Mention de la délivrance du brevet:
13.01.88 Bulletin 88/2

(84) Etats contractants désignés:
BE CH DE GB IT LI NL SE

(56) Documents cité:
FR-A-2 457 846
GB-A-622 243
GB-A-1 131 875
GB-A-2 050 342
GB-A-2 075 963
GB-A-2 093 818
US-A-3 826 663

Le dossier contient des informations techniques présentées postérieurement au dépôt de la demande et ne figurant pas dans le présent fascicule.

(73) Titulaire: "Société des Anciens Etablissements LOUDE Fréres" Société Anonyme dite:, 1 à 25 rue Plantevigne, F-33800 Bordeaux (FR)

(72) Inventeur: Pascau, Jean- Maurice, 1 à 25 rue Plantevigne, F-33800 Bordeaux (FR)

(74) Mandataire: Thébault, Jean- Louis, Cabinet Jean-Louis Thébault 50, Cours de Verdun, F-33000 Bordeaux (FR)

LIBER, STOCKHOLM 1988

## Description

La présente invention a trait à une nouvelle composition durcissable du type contenant un liant hydraulique, une matière de charge et de l'eau et destinée plus particulièrement, bien que non exclusivement, au colmatage d'orifices de passage dans une paroi quelconque ou à la protection de poutres et cloisons en métal ou autres matériaux.

Il est souvent nécessaire de pratiquer dans une paroi séparant deux milieux qui doivent être isolés l'un de l'autre de manière la plus absolue possible, des sections de passage telles que des trémies par exemple permettant la liaison entre les deux milieux pour de multiples raisons (notamment pour les fileries et canalisations diverses).

Ces trémies sont une voie de passage à travers la paroi pour le feu, l'air, l'eau ou autre agent polluant ou agressif, qui ont la possibilité de s'insinuer dans les interstices entre canalisations par exemple et la paroi de la trémie.

Il importe donc de colmater le plus soigneusement possible de telles sections de passage.

Ce problème est particulièrement crucial dans les installations nucléaires, entre autres, et n'est pas résolu actuellement de manière absolument satisfaisante au point de vue de la fiabilité et de la tenue dans le temps. En effet, on utilise habituellement des mortiers confectionnés avec de la chaux, du sable et un ciment. Ces mortiers, une fois durcis, donnent un matériau non stable qui ne s'accroche pas sur tous les supports et qui se désagrège dans le temps. De tels matériaux ne résistent ni à l'eau, ni à l'air, ni au feu.

Le but de la présente invention est de remédier à ces inconvénients en proposant une nouvelle composition durcissable et son procédé d'application notamment au colmatage d'orifices de passage indésirables dans des parois en vue d'assurer une isolation réelle totale et véritablement durable entre les deux côtés desdites parois.

A cet effet, l'invention a pour objet une composition durcissable du type comprenant un liant hydraulique, de l'eau, une matière de charge à base de chaux et un agent donnant de la souplesse et facilitant l'accrochage, caractérisée en ce que ladite matière de charge comporte, en outre, de la poudre fine de "Vermiculite"® dont le diamètre moyen des grains est de préférence inférieur à 250 µm environ, et de l'argile en poudre de préférence très fine, et en ce que ledit agent donnant de la souplesse et facilitant l'accrochage est choisi dans le groupe constitué par les latex acryliques, les caoutchoucs et le lait de ceux-ci.

Le liant hydraulique est par exemple du ciment blanc.

La chaux comprend de la chaux anhydre CaO et/ou de la chaux hydratée Ca(OH)₂.

On entend par poudre fine de "Vermiculite"® un produit très fin tel que celui connu sous la dénomination "Vermex 2D"® qui se mélange intimement aux autres constituants, notamment à l'argile en poudre, laquelle est broyée le plus finement possible, donnant à celle-ci la faculté de ne pas se rétracter en séchant.

Les divers constituants de la composition sont mélangés de façon à obtenir une pâte modelable plus ou moins fluide selon les proportions retenues.

Parmi les compositions connues, le document FR 2.457.846 décrit une composition durcissable comprenant un liant hydraulique, une matière de charge à base de chaux et de l'eau, mais qui est totalement inapte au colmatage de trémies, du fait qu'elle est peu résistante au feu et nécessite d'être travaillée à l'aide d'un moule ou d'un coffrage.

A titre indicatif la proportion en poids de l'ensemble "Vermiculite"® plus argile est comprise entre environ 10 % et environ 150 % du complexe chaux plus liant hydraulique.

Avantageusement le diamètre moyen des grains de "Vermiculite"® est inférieur ou égal à 250 µm environ.

Grâce à cette poudre de "Vermiculite"® la composition sèche à coeur et de façon plus homogène de sorte que l'on évite les fendillements obtenus avec les compositions connues. L'argile en association avec le latex ou le lait constitue une barrière hydrofuge et ignifuge empêchant l'humidité et le feu de pénétrer dans le matériau une fois durci.

A titre indicatif le latex ou le lait (du lait entier en poudre par exemple) entre dans une proportion en poids d'extrait sec comprise entre environ 10 % et environ 50 % de l'ensemble "Vermiculite"® plus argile à l'état sec, le latex ou le lait étant mélangé à de l'eau à raison de 1/4 en poids d'extrait sec pour 3/4 en poids d'eau, par exemple de l'eau ordinaire.

Avantageusement, la matière de charge contient en outre de la silice en poudre fine, le diamètre des grains étant inférieur ou égal à environ 50 µm, avec de préférence une teneur en poids comprise entre environ 30 % et environ 200 % du poids de "Vermiculite"® ou bien entre 65 et 70 % du poids de l'argile en poudre, ce qui contribue avec la poudre de "Vermiculite"® à stabiliser l'argile et à l'empêcher de se contracter.

De la "Vermiculite"® ordinaire plus ou moins grosse peut être ajoutée.

La proportion en volume de la "Vermiculite"® ordinaire par rapport à l'ensemble "Vermiculite"® fine plus argile est comprise entre environ 50 % et environ 300 %.

Des fibres de verre peuvent également être ajoutées afin de renforcer les qualités mécaniques, à titre d'exemple les fibres ayant une longueur de l'ordre de 10 à 50 mm et constituant en volume environ 2 % de la composition.

La composition durcissable selon l'invention peut se travailler comme une pâte à modeler et être montée verticalement sans coffrage.

Le latex ou le lait confère de la souplesse à ce matériau, le rend moins cassant et plus accrochant et plus imperméable à l'humidité.

La pâte réalisée à partir de la composition selon l'invention est mise en place suivant diverses méthodes selon les applications envisagées.

Dans le cas du colmatage d'une trémie accessible des deux côtés de la paroi et assurant le passage de câbles ou canalisations à travers la paroi, on met en place une couche de ladite pâte modelable.

Celle-ci est dressée sensiblement perpendiculairement à l'axe de la trémie et des divers câbles et canalisations sur une plus ou moins grande épaisseur. Ensuite, avantageusement, sur l'une des faces de cette couche (ou sur les deux) on étale, par exemple au pinceau, une résine (par exemple une résine polyester) accélérée par catalyseur, après avoir appliqué au préalable une résine polystyrène destinée à assurer un bon accrochage, par exemple une résine du type "G4"®. On empêche ainsi efficacement l'air de passer.

L'association résine polystyrène + résine polyester peut être remplacée par une résine époxy.

Une nouvelle couche de ladite pâte modelable est ensuite appliquée sur la surface extérieure de la ou des couches de résines.

Enfin, les surfaces extérieures du sandwich ainsi constitué reçoivent éventuellement une couche protectrice de peinture ignifuge.

En variante, ladite résine polyester peut être renforcée par des fibres de verre, par exemple du type "Veranne"® ou "Mat de verre".

Le colmatage de la trémie est ainsi réalisé à l'aide d'un bouchon stratifié ou sandwich dont les couches sont perpendiculaires à l'axe de la trémie et obturent tous les interstices et intervalles entre la ou les parois internes de la trémie et les câbles, canalisations ou autres objets traversant ladite trémie.

Il est à noter que de tels bouchons résistent remarquablement à l'air, l'eau, le feu, à de très fortes pressions ainsi qu'à des températures dépassant 1.000°C comme l'ont prouvé des essais effectués au Centre Scientifique et Technique du Bâtiment (essais CSTB N° 80-16584 du 28.01.82). Ces bouchons peuvent également être facilement percés par exemple pour le passage d'un câble.

La couche de ladite pâte modelable peut être, selon les applications, mise en place seule, sans les résines, avec éventuellement une couche de peinture ignifuge sur les faces extérieures accessibles.

D'une manière générale si plusieurs couches de ladite pâte modelable sont mises en place il peut être bon d'interposer entre deux couches consécutives lesdites résines chargées d'assurer l'étanchéité parfaite de l'orifice ou de la section de passage solmaté.

La pâte modelable selon l'invention peut être utilisée pour simplement revêtir une surface plane ou non en un matériau quelconque et qu'il faut protéger contre le feu, l'air, l'eau, notamment. Ladite pâte permet, en effet, de réaliser un excellent revêtement de surface anti-feu et hydrofuge.

**Revendications**

1. Composition durcissable du type comprenant un liant hydraulique, de l'eau, une matière de charge à base de chaux et un agent donnant de la souplesse et facilitant l'accrochage, caractérisée en ce que ladite matière de charge comporte, en outre, de la poudre fine de "Vermiculite"® dont le diamètre moyen des grains est de préférence inférieur à 250 μm environ, et de l'argile en poudre de préférence très fine, et en ce que ledit agent donnant de la souplesse et facilitant l'accrochage est choisi dans le groupe constitué par les latex acryliques, les caoutchoucs, et le lait de ceux-ci.

2. Composition suivant la revendication 1 caractérisée en ce que la proportion en poids de l'ensemble "Vermiculite"® plus argile est comprise entre environ 10 % et environ 150 % du complexe chaux plus liant hydraulique.

3. Composition suivant l'une des revendications 1 à 2 caractérisée en ce que le latex ou le lait entre en proportion en poids d'extrait sec comprise entre environ 10 % et environ 50 % de l'ensemble "Vermiculite"® plus argile à l'état sec, le latex ou le lait étant mélangé à de l'eau à raison de 1/4 en poids d'extrait sec pour 3/4 de poids d'eau.

4. Composition suivant l'une des revendications 1 à 3 caractérisée en ce qu'elle comprend, en outre, de la silice en poudre fine dont le diamètre moyen des grains est de préférence inférieur ou égal à 50 μm environ, la proportion en poids de silice par rapport à la "Vermiculite"® étant comprise entre environ 30 % et environ 200 %.

5. Composition suivant l'une des revendications 1 à 4 caractérisée en ce qu'elle comprend, en outre, de la "Vermiculite"® ordinaire dont la proportion en volume par rapport à l'ensemble "Vermiculite"® fine plus argile est comprise entre environ 50 % et environ 300 %.

6. Composition suivant l'une des revendications 1 à 5 caractérisée en ce qu'elle comprend, en outre, des fibres de verre de longueur comprise entre environ 10 mm et environ 50 mm, représentant 2 % environ en volume de la composition, afin de renforcer les qualités mécaniques.

7. Composition suivant l'une des revendications 1 à 6 caractérisée en ce que le liant hydraulique est du ciment blanc.

8. Composition suivant l'une des revendications 1 à 7 caractérisée en ce que la chaux comprend de la chaux anhydre et/ou de la chaux hydratée.

9. Procédé de mise en oeuvre de la composition selon l'une des revendications 1 à 8, appliqué notamment au colmatage de trémies ou analogues, caractérisé en ce qu'il consiste à mettre en place perpendiculairement à l'axe de la trémie au moins deux couches parallèles d'une pâte facilement modelable réalisée à l'aide de ladite composition avec interposition entre les deux couches d'une couche constituée d'une résine époxy ou d'une association formée d'une résine polyester, accélérée par catalyseur, et d'une résine polystyrène notamment du type "G4"®.

10. Procédé suivant la revendication 9 caractérisé en ce qu'on renforce la résine polyester à l'aide de fibres de verre.

11. Procédé suivant la revendication 9 ou 10 caractérisé en ce qu'on applique sur la surface externe exposée des couches réalisées à l'aide de ladite pâte une couche de peinture ignifuge.

12. Dispositifs d'obturation et protection, notamment d'orifices dans des parois obtenus à l'aide du procédé selon l'une des revendications 9 à 11.


## Patentansprüche

1. Härtbare Mischung eines Typs enthaltend ein hydraulisches Bindemittel, Wasser, ein Füllmaterial auf der Basis von Kalk und ein Mittel, das Schmiegsamkeit liefert und ein Verstopfen erleichtert, dadurch gekennzeichnet, daß das besagte Füllmaterial weiterhin feines "Vermiculite"®-Pulver, dessen mittlerer Korndurchmesser vorzugsweise unterhalb von etwa 250 μm liegt, und Ton als Pulver vorzugsweise in sehr feiner Form enthält, und daß das besagte Mittel, das die Schmiegsamkeit liefert und das Verstopfen erleichtert, ausgewählt ist aus der Gruppe bestehend aus acrylischen Latizes, Kautschukarten und der Milch hiervon.

2. Mischung nach Anspruch 1, dadurch gekennzeichnet, daß der Gewichtsanteil der Bestandteile "Vermiculite"® plus Ton zwischen etwa 10 % und etwa 150 % des Komplexes aus Kalk plus hydraulischem Bindemittel besteht.

3. Mischung nach einem der Ansprüche 1 bis 2, dadurch gekennzeichnet, daß der Latex oder die Milch im Gewichtsanteil der Trockensubstanz zwischen etwa 10 % und etwa 50 % der Bestandteile "Vermiculite"® plus Ton im trockenen Zustand einnimmt, wobei der Latex oder die Milch mit Wasser im Verhältnis 1/4 Gewicht Trockensubstanz zu 3/4 Gewicht Wasser gemischt wird.

4. Mischung nach einem der Ansprüche 1 bis 3, dadurch gekennzeichnet, daß sie zudem Siliziumdioxid als feines Pulver, dessen Korndurchmesser vorzugsweise weniger oder gleich etwa 50 μm ist, enthält, wobei der Gewichtsanteil von Siliziumdioxid im Verhältnis zum "Vermiculite"® zwischen etwa 30 % und etwa 200 % lieqt.

5. Mischung nach einem der Ansprüche 1 bis 4, dadurch gekennzeichnet, daß sie zudem gewöhnlichen "Vermiculite"® enthält, dessen Gewichtsanteil im Verhältnis zu dem feinen "Vermiculite"® plus Ton zwischen etwa 50 % und etwa 200 % liegt.

6. Mischung nach einem der Ansprüche 1 bis 5, dadurch gekennzeichnet, daß sie zudem Glasfasern einer Länge zwischen etwa 10mm und etwa 50mm enthält, die etwa 2 Vol.-% der Mischung darstellen, um die mechanischen Qualitäten zu verstärken.

7. Mischung nach einem der Ansprüche 1 bis 6, dadurch gekennzeichnet, daß das hydraulische Bindemittel weißer Zement ist.

8. Mischung nach einem der Ansprüche 1 bis 7, dadurch gekennzeichnet, daß der Kalk Branntkalk und/oder gelöschten Kalk umfaßt.

9. Verfahren zur Aufbereitung der Mischung nach einem der Ansprüche 1 bis 8, insbesondere zum Verstopfen von Löchern o.dgl. angewendet, dadurch gekennzeichnet, daß es darin besteht, senkrecht zur Achse des Lochs wenigstens zwei parallele Schichten aus einer leicht modelierbaren Paste, die mit Hilfe der besagten Mischung hergestellt wird, unter Zwischenschaltung einer Schicht gebildet aus einem Epoxydharz oder aus einer Mischung gebildet aus einem durch einen Katalysator beschleunigten Polyesterharz und einem Polystyrolharz insbesondere vom Typ "G4"® zwischen den beiden Schichten angeordnet wird.

10. Verfahren nach Anspruch 9, dadurch gekennzeichnet, daß man das Polyesterharz mittels Glasfasern verstärkt.

11. Verfahren nach Anspruch 9 oder 10, dadurch gekennzeichnet, daß man auf die freie Außenfläche der mit Hilfe der besagten Paste hergestellten Schichten eine Schicht aus einem feuerhemmenden Anstrich aufbringt.

12. Abdicht- und Schutzeinrichtungen insbesondere für Öffnungen in Wänden, erhalten mit Hilfe des Verfahrens gemäß einem der Ansprüche 9 bis 11.


## Claims

1. Curable composition of the type comprising a hydraulic binder, water, a filling material with a lime base and an agent imparting flexibility and facilitating clinging, characterised in that said filling material further comprises fine "Vermiculite"® powder, the mean diameter of the grains of which is preferably less than about 250 μm, and powdered clay which is preferably very fine, and in that said agent imparting flexibility and facilitating clinging is selected from the group consisting of acrylic latexes, rubbers and the milk of these.

2. Composition according to Claim 1, characterised in that the proportion by weight of the combination "Vermiculite"® plus clay is comprised between about 10 % and about 15 % of the complex lime plus hydraulic binder.

3. Composition according to any one of Claims 1 to 2, characterised in that the latex or the milk is included in a proportion by weight of dry extract comprised between about 10 % and about 50 % of the combination "Vermiculite"® plus clay in the dry state, the latex or the milk being mixed with water in the ratio of 1/4 by weight of dry extract to 3/4 by weight of water.

4. Composition according to any one of Claims 1 to 3, characterised in that it further comprises silica in a fine powder of which the mean diameter of the grains is preferably less than or equal to about 50 μm, the proportion by weight of silica in relation to the "Vermiculite"® being comprised between about 30 % and about 200 %.

5. Composition according to any one of Claims 1 to 4, characterised in that it further comprises ordinary "Vermiculite"® of which the proportion by volume in relation to the combination of fine "Vermiculite"® plus clay is comprised between about 50 % and about 300 %.

6. Composition according to any one of Claims 1 to 5, characterised in that it further comprises glass fibres of a length comprised between about 10 mm and about 50 mm, representing about 2 % by volume of the composition, in order to reinforce the mechanical properties.

7. Composition according to any one of Claims 1 to 6, characterised in that the hydraulic binder is white cement.

8. Composition according to any one of Claims 1 to 7, characterised in that the lime comprises quicklime and/or hydrated lime.

9. Method of using the composition according to any one of Claims 1 to 8, applied in particular to the stopping of ducts or the like, characterised in that it consists in placing in position, perpendicularly to the axis of the duct, at least two parallel layers of an easily moulded paste made by means of said composition with the interposition between the two layers of a layer consisting of an epoxy resin or of an association formed from a polyester resin, accelerated by a catalyst, and from a polystyrene resin particularly of the type "G4"®.

10. Method according to Claim 9, characterised in that the polyester resin is reinforced by means of glass fibres.

11. Method according to Claim 9 or 10, characterised in that a coat of fireproof paint is applied to the exposed external surface of the layers formed by means of said paste.

12. Stopping and protection arrangements particularly for orifices in walls, obtained by means of the method according to any one of Claims 9 to 11.